# EUROPÄISCHE PATENTSCHRIFT

(11) **EP 2 466 328 B1**
(45) Veröffentlichungstag und Bekanntmachung des Hinweises auf die Patenterteilung: **26.06.2013**
(21) Anmeldenummer: 10015779.1
(22) Anmeldetag: 17.12.2010
(51) Int. Cl.: G01S 7/481, G01S 17/08, G01S 17/89

(54) **Laserscanner und Verfahren zur ortsaufgelösten Erfassung der Umgebung eines Fahrzeugs mittels eines Laserscanners**
Laser scanner and method for spatially resolved recording of the vicinity of a vehicle by means of a laser scanner
Scanner laser et procédé de détection à résolution spatiale de l'environnement d'un véhicule à l'aide d'un scanner laser

(43) Veröffentlichungstag der Anmeldung: 20.06.2012
(73) Patentinhaber: SICK AG, 79183 Waldkirch/Breisgau (DE)
(72) Erfinder: Fürstenberg, Kay, Dr.Ing., 21029 Hamburg (DE); Ahlers, Florian, Dipl.Ing., 22089 Hamburg (DE)
(74) Vertreter: Manitz, Finsterwald & Partner GbR

(56) Entgegenhaltungen:
- EP-A1- 1 531 343
- EP-A1- 1 557 692
- EP-A1- 2 244 105

## Beschreibung

Die vorliegende Erfindung betrifft einen Laserscanner sowie ein Verfahren zum ortsaufgelösten Erfassen der Umgebung eines sich auf einem Boden fortbewegenden Fahrzeugs mittels eines Laserscanners und zur Unterscheidung zwischen einem in der Umgebung des Fahrzeugs vorhandenen Objekt einerseits und dem Boden andererseits.

Die Erfindung geht von einem Laserscanner aus, der die Umgebung in wenigstens einer Scanebene abtastet, der während eines einen Scanwinkel überstreichenden Scans für unterschiedliche Richtungen in der Scanebene jeweils einen Entfernungsmesswert ermittelt, welcher durch Aussenden von Laserstrahlung in die jeweilige Richtung und durch Auswerten der aus dieser Richtung zurückgestrahlten Laserstrahls nach dem Laufzeitmessverfahren ermittelt wird, und der aus den Entfernungsmesswerten ein ortsaufgelöstes Scanbild der Umgebung erstellt.

Abhängig von einer Topographie des Bodens sowie Fahrzeugnick- oder Fahrzeugwankbewegungen, beispielsweise aufgrund von Bodenunebenheiten, kann die Abtastebene während der Fortbewegung des Fahrzeugs zu einem Zeitpunkt oberhalb des Bodens verlaufen und dabei auf die sich in der Fahrzeugumgebung oberhalb des Bodens erstreckenden Objekte gerichtet sein, sodass diese Objekte erkannt werden, und zu einem anderen Zeitpunkt den Boden schneiden, so dass die ausgesendete Laserstrahlung von dem Boden reflektiert wird und anstelle von Objektmessungen Messungen des Bodens erfolgen.

Um z.B. in Anwendungen, in denen Hindernisse wie Mauern, Bäume oder Ähnliches erkannt werden sollen, eine sinnvolle Auswertung der Messergebnisse überhaupt erst zu ermöglichen, ist es notwendig, solche Bodenmessungen in dem Scanbild von vertikal ausgedehnten Objekten zu unterscheiden.

Bei mehrzeiligen Laserscannern, die die Umgebung in mehreren übereinander angeordneten Scanebenen abtasten, ist es bekannt, Bodenmessungen daran zu erkennen, dass in der Vertikalrichtung benachbarte Scanebenen nahezu identische Entfernungsmesswerte liefern, wenn sie auf demselben vertikal ausgedehnten Objekt liegen, jedoch signifikant unterschiedliche Entfernungsmesswerte liefern, wenn die beiden Scanebenen den Boden schneiden, da dann die weiter unten angeordnete Scanebene den Boden in einer deutlich geringeren Entfernung von dem Fahrzeug schneidet und somit niedrigere Entfernungsmesswerte liefert als die weiter oben angeordnete Abtastebene.

Das vorstehend beschriebene Verfahren setzt voraus, dass der Laserscanner über mehrere Scanebenen verfügt, die gleichzeitig aktiviert sind und aufeinander abgestimmte Entfernungsmesswerte ohne einen systembedingten Versatz oder sonstigen Fehler liefern. Sowohl die Bereitstellung eines solchen Laserscanners als auch der Betrieb des Laserscanners zur Durchführung des Verfahrens sind somit aufwendig und weisen eine geringe Fehlertoleranz auf.

In EP 2 244 105 A1 ist ein Verfahren gemäß dem Oberbegriff des Anspruchs 1 und ein Laserscanner gemäß dem Oberbegriff des Anspruchs 9 offenbart.

EP 1 531 343 A1 offenbart ein Verfahren zur Verfolgung von Objekten, die von einem Laserscanner erfassten Gegenständen in einem Erfassungsbereich entsprechen, auf der Basis von in zeitlicher Folge von dem Sensor erfassten Abstandsbildern des Erfassungsbereichs, wobei bei der Umsetzung von Abtastdaten eines Abtastbildes in Bildpunkte Korrekturen zum Beispiel in Bezug auf eine Bewegung des Sensors vorgenommen werden.

EP 1 557 692 A1 offenbart ein Verfahren zur Erkennung von gekennzeichneten Gefahr- und/oder Baustellen im Bereich von Fahrbahnen. Es werden von einem an dem Fahrzeug gehaltenen Laserscanner erzeugte Abstandsbilder des Erfassungsbereichs verwendet und es wird in den Abstandsbildern nach Kennzeichen für gekennzeichnete Gefahr- und/oder Baustellen gesucht. Dabei wird ein Verfahren zur Bodenerkennung eingesetzt.

Aufgabe der vorliegenden Erfindung ist es, einen verbesserten Laserscanner sowie ein verbessertes Verfahren zur sicheren und zuverlässigen Unterscheidung von Objektmessungen einerseits und Bodenmessungen andererseits zu schaffen, wobei das Verfahren insbesondere mit den Messwerten einer einzelnen Abtastebene arbeitet und auch mit einem einzeiligen Laserscanner realisiert werden kann.

Diese Aufgabe wird durch ein Verfahren mit den Merkmalen des Anspruchs 1 und durch einen Laserscanner mit den Merkmalen des Anspruchs 9 gelöst.

Bei dem erfindungsgemäßen Verfahren wird das Scanbild aus mehreren Einzelbildern aufgebaut, die aus Entfernungsmesswerten zeitlich aufeinander folgender Scans erstellt werden, wobei die Einzelbilder mittels der aktuellen Fahrzeuggeschwindigkeit korrigiert werden und nach der Korrektur das Vorliegen unterschiedlicher Entfernungen der Einzelbilder als Boden und das Vorliegen einer gemeinsamen Entfernung der Einzelbilder als Objekt gewertet wird.

Die Erfindung macht sich somit den Umstand zunutze, dass sich der Abstand zwischen dem Fahrzeug und der Schnittlinie zwischen Abtastlinie und Boden nicht ändert, wenn die Abtastebene des Laserscanners den Boden unter einem bestimmten Winkel schneidet und sich das Fahrzeug fortbewegt, während sich der Abstand zwischen dem Laserscanner und einem feststehenden Objekt hingegen entsprechend der aktuellen Fahrzeuggeschwindigkeit ändert, mit der sich das Fahrzeug auf das Objekt zu bewegt.

Die Erfindung beruht auf der Erkenntnis, dass dieser prinzipbedingte Unterschied durch eine entsprechende Auswertung von Teilbildern, die aus Entfernungsmesswerten zeitlich aufeinander folgender Scans erstellt werden und die somit in einem zeitlichen Abstand zueinander aufgenommen werden, sichtbar gemacht und gemessen werden kann. Die Teilbilder verhalten sich dahingehend, dass bei Vorliegen einer Bodenmessung die verschiedenen Teilbilder im Wesentlichen den gleichen Abstand anzeigen und bei einer Objektmessung die Teilbilder eine Veränderung der gemessenen Entfernung gemäß der aktuellen Fahrzeuggeschwindigkeit anzeigen. Nach einer Korrektur der von den Teilbildern repräsentierten Entfernungsmesswerte mit der aktuellen Fahrzeuggeschwindigkeit ergeben sich somit bei einer Bodenmessung unterschiedliche Entfernungen der korrigierten Teilbilder, während die korrigierten Teilbilder bei einer Objektmessung eine gemeinsame Entfernung zu dem Objekt anzeigen.

Durch die Verwendung von während zeitlich aufeinander folgender Scans erstellten Einzelbildern kann somit erfindungsgemäß unter Verwendung einer einzigen Scanebene sicher und zuverlässig eine Aussage darüber getroffen werden, ob es sich bei einer aktuellen Messung um eine Bodenmessung oder eine Objektmessung handelt.

Vorteilhafte Ausführungsformen der Erfindung sind in den abhängigen Ansprüchen, der Beschreibung und den Figuren beschrieben.

Gemäß einer vorteilhaften Ausführungsform sind die Einzelbilder örtlich zueinander versetzt, das heißt, dass die Richtungen, zu denen in den einzelnen Einzelbildern Entfernungsmesswerte enthalten sind, von Einzelbild zu Einzelbild örtlich versetzt angeordnet sind. Auf diese Weise kann eine erhöhte Ortsauflösung des aus den Einzelbildern zusammengesetzten Scanbildes erreicht werden, da dann in dem Scanbild zu einer größeren Anzahl von verschiedenen Richtungen Entfernungsmesswerte vorhanden sind. Dieser örtliche Versatz der Einzelbilder ist jedoch nicht zwingend, denn es ist auch möglich, dass die Richtungen für alle Einzelbilder gleich sind. Die Ortsauflösung des zusammengesetzten Scanbildes entspricht dann jener der Einzelbilder, was in Abhängigkeit von den Leistungsparametern des Laserscanners aber für die jeweilige Anwendung ausreichend sein kann.

Da im Rahmen der Erfindung Einzelbilder aus mehreren Scans zum Aufbau eines Scanbildes verwendet werden, sind letztlich mehrere Scans notwendig, um das Scanbild zu erzeugen. Um trotzdem eine hohe Auflösung und somit hohe Messgenauigkeit des Laserscanners zu gewährleisten, kann im Rahmen der Erfindung vorgesehen sein, dass ein einzelner Scan vergleichsweise schnell durchgeführt wird und dabei ein vergleichsweise großer Winkelabstand zwischen zwei aufeinander folgend ausgesendeten Laserstrahlen während eines Scans in Kauf genommen wird. Wenn die Einzelbilder wie vorstehend beschrieben örtlich zueinander versetzt sind, kann trotz des vergleichsweise großen örtlichen Abstands der Entfernungswerte in den Einzelbildern eine hohe zeitliche und örtliche Auflösung erreicht werden und gleichzeitig eine sichere und zuverlässige Unterscheidung zwischen Bodenmessungen und Objektmessungen erfolgen.

Vorzugsweise weisen die Einzelbilder jeweils Entfernungsmesswerte zu Richtungen auf, die innerhalb eines Scanwinkelbereichs liegen, wobei sich die Scanwinkelbereiche der Einzelbilder zumindest teilweise überlappen. Wenn die Einzelbilder wie vorstehend beschrieben örtlich zueinander versetzt sind, kann auf diese Weise gewährleistet werden, dass auch bei vergleichsweise großen örtlichen Abständen der Entfernungsmesswerte in einem einzigen Einzelbild über den betrachteten Scanwinkelbereich eine hohe Auflösung des resultierenden zusammengesetzten Scanbildes gewährleistet ist. Bevorzugt überlappen sich die Scanwinkelbereiche der Einzelbilder annähernd vollständig. Beispielhafte Scanwinkelbereiche für die Einzelbilder und das zusammengesetzte Scanbild können im Bereich von 90°, 180° oder 360° liegen.

Gemäß einer vorteilhaften Ausführungsform weisen die Einzelbilder jeweils Entfernungsmesswerte zu Richtungen auf, die in regelmäßigen Winkelabständen aufeinander folgen. Insbesondere können die Richtungen, zu denen ein Einzelbild Entfernungsmesswerte enthält, in gleich bleibenden Winkelabständen aufeinander folgen. Eine Erzeugung derartiger Einzelbilder kann in besonders einfacher Weise z.B. dadurch erfolgen, dass eine Sendeeinheit des Laserscanners, beispielsweise eine Laserdiode, in gleich bleibenden Zeitabständen Laserstrahlungspulse aussendet und die Laserstrahlungspulse von einer gleichmäßig rotierenden Ablenkeinrichtung in die Umgebung des Laserscanners umgelenkt werden.

Eine weitere vorteilhafte Ausführungsform sieht vor, dass die Richtungen, zu denen in dem aus den Einzelbildern aufgebauten Scanbild Entfernungsmesswerte vorhanden sind, in regelmäßigen Winkelabständen, insbesondere gleich beabstandet, aufeinander folgen. Es ergibt sich somit ein aus den Einzelbildern zusammengesetztes Scanbild mit einer konstanten Auflösung über den abgebildeten Scanwinkelbereich.

In dem Scanbild kann dabei der Winkelabstand zweier aufeinander folgender Richtungen in den Einzelbildern jeweils größer sein als der Winkelabstand aller einander entsprechender Richtungen der Einzelbilder. Das heißt, dass in dem Scanbild zwischen zwei benachbarten Entfernungsmesswerten eines Einzelbilds jeweils zumindest ein oder bevorzugt mehrere Entfernungsmesswerte von anderen Einzelbildern, insbesondere von allen Einzelbildern jeweils ein Entfernungsmesswert, liegen, so dass die Auflösung des Scanbilds insgesamt in dem jeweiligen Winkelbereich stets größer ist als die Auflösung jedes der Einzelbilder für sich alleine genommen.

Zur Durchführung des Verfahrens kann insbesondere auch ein einzeiliger Laserscanner verwendet werden, der die Laserstrahlung in genau einer Scanebene aussendet. Auch bei Verwendung eines solchen unaufwendigen Laserscanners gewährleistet das Verfahren eine zuverlässige und sichere Unterscheidung zwischen Bodenmessungen und Objektmessungen. Auch bei einem mehrzeiligen Laserscanner, der dazu ausgebildet ist, Laserstrahlung in mehreren Abtastebenen auszusenden, kann das Verfahren in Bezug auf eine der Abtastebenen verwendet werden, so dass auch bei Nichtverfügbarkeit einer der Abtastebenen oder mangelnder Synchronisierung zwischen den Abtastebenen eines solchen Laserscanners eine zuverlässige Unterscheidung zwischen Objektmessungen und Bodenmessungen ermöglicht wird.

Abhängig von einer Bewertung einer Messung als Bodenmessung oder Objektmessung kann beispielsweise bei einer Hinderniserkennung eine Funktion, insbesondere eine Sicherheitsfunktion, eingeleitet werden, wenn ein Objekt in der Umgebung des Fahrzeugs erkannt wird, während eine Bodenmessung in dieser Hinsicht ignoriert wird.

Gemäß einem Ausführungsbeispiel ist vorgesehen, dass zur Unterscheidung zwischen einem Objekt und dem Boden zusätzlich Informationen berücksichtigt werden, die durch ein Objektklassifizierungsverfahren und/oder durch ein Objektverfolgungsverfahren erhalten werden, wobei insbesondere das Objektklassifizierungsverfahren und/oder das Objektverfolgungsverfahren auf einer Analyse von Echopulsen der ausgewerteten zurückgestrahlten Laserstrahlung beruhen, und wobei die Analyse der Echopulse wenigstes eine von der Energie der einzelnen Echopulse abhängige Echopulseigenschaft betrifft, insbesondere eine Echopulsfläche, eine Echopulshöhe und/oder eine Echopulsbreite.

Die zusätzliche Nutzung einer solchen Klassifizierung und/oder Verfolgung (auch als "Tracking" bezeichnet) ist insbesondere dann von Vorteil, wenn sich vor dem Fahrzeug ein Objekt, insbesondere ein vorausfahrendes anderes Fahrzeug, mit zumindest näherungsweise der gleichen Geschwindigkeit wie das eigene Fahrzeug bewegt und sich insofern wie der Boden verhält. Die Klassifizierung bzw. Verfolgung schafft ein zusätzliches Unterscheidungskriterium, da z.B. ein vorausfahrendes Fahrzeug für den Laserscanner "anders aussieht" und sich "anders verhält" als der Boden. Besonders vorteilhaft insbesondere für die Klassifizierung ist die Nutzung einer Analyse von Echopulseigenschaften, insbesondere von Echopulsbreiten, die Rückschlüsse auf das Reflexionsverhalten des Objektes ermöglicht. Auch die Verfolgung bzw. das Tracking kann zumindest teilweise auf einer Analyse von Echopulseigenschaften beruhen, wobei aber auch andere Methoden zum Einsatz kommen können.

Hinsichtlich der Nutzung von Echopulseigenschaften für die Klassifizierung und Verfolgung wird hiermit ausdrücklich Bezug genommen auf den Inhalt der veröffentlichten deutschen Patentanmeldungen DE 10 2004 003 870 A1 und DE 10 2004 003 868 A1.

Weiterer Gegenstand der Erfindung ist ein Laserscanner zum ortsaufgelösten Erfassen der Umgebung eines sich auf einem Boden fortbewegenden Fahrzeugs und zur Unterscheidung zwischen einem in der Umgebung des Fahrzeugs vorhandenen Objekt einerseits und dem Boden andererseits, wobei der Laserscanner dazu ausgebildet ist, die Umgebung in wenigstens einer Scanebene abzutasten, während eines einen Scanwinkel überstreichenden Scans für unterschiedliche Richtungen in der Scanebene jeweils durch Aussenden von Laserstrahlung in die jeweilige Richtung und durch Auswerten der aus dieser Richtung zurückgestrahlten Laserstrahlung nach dem Laufzeitmessverfahren einen Entfernungsmesswert zu ermitteln, und aus den Entfernungsmesswerten ein ortsaufgelöstes Scanbild der Umgebung zu erstellen. Der Laserscanner ist ferner dazu ausgebildet, das Scanbild aus mehreren Einzelbildern aufzubauen, die aus Entfernungsmesswerten zeitlich aufeinander folgender Scans erstellt werden, die Einzelbilder mittels der aktuellen Fahrzeuggeschwindigkeit zu korrigieren und nach der Korrektur das Vorliegen unterschiedlicher Entfernungen der Einzelbilder als Boden und das Vorliegen einer gemeinsamen Entfernung der Einzelbilder als Objekt zu werten.

Gemäß einer vorteilhaften Ausführungsform ist der Laserscanner zur Durchführung eines wie vorstehend beschriebenen Verfahrens ausgebildet. Die hierin in Bezug auf das Verfahren beschriebenen vorteilhaften Ausführungsformen und Vorteile finden entsprechend auf den Laserscanner Anwendung.

Der Laserscanner kann insbesondere als einzeiliger Laserscanner ausgebildet sein, der die Laserstrahlung in genau einer Abtastebene aussendet.

Der Laserscanner kann eine bewegliche Ablenkeinrichtung umfassen, welche die ausgesendete Laserstrahlung in eine jeweilige Richtung in die Umgebung umlenkt und aus der jeweiligen Richtung zurückgeworfene Laserstrahlung auf eine Empfangseinheit des Laserscanners umlenkt. Eine solche Ablenkeinrichtung, z.B. ein Spiegel oder ein Prisma, kann durch eine Antriebseinheit rotierend antreibbar sein. Auf diese Weise wird eine besonders einfache Ausgestaltung eines Laserscanners erreicht.

Nachfolgend wird die vorliegende Erfindung rein beispielhaft unter Bezugnahme auf die beigefügten Figuren beschrieben. Es zeigen:
- Fig. 1: eine schematische Ansicht eines Verfahrens gemäß einer ersten Ausführungsform der Erfindung;
- Fig. 2a: eine schematische Ansicht eines beispielhaften Scanbildes bei Vorliegen einer Objektmessung;
- Fig. 2b: eine schematische Ansicht eines beispielhaften Scanbilds bei Vorliegen einer Bodenmessung;
- Fig. 3a: ein Fahrzeug mit einem erfindungsgemäßen Laserscanner während einer Objektmessung; und
- Fig. 3b: das Fahrzeug von Fig. 3a während einer Bodenmessung.

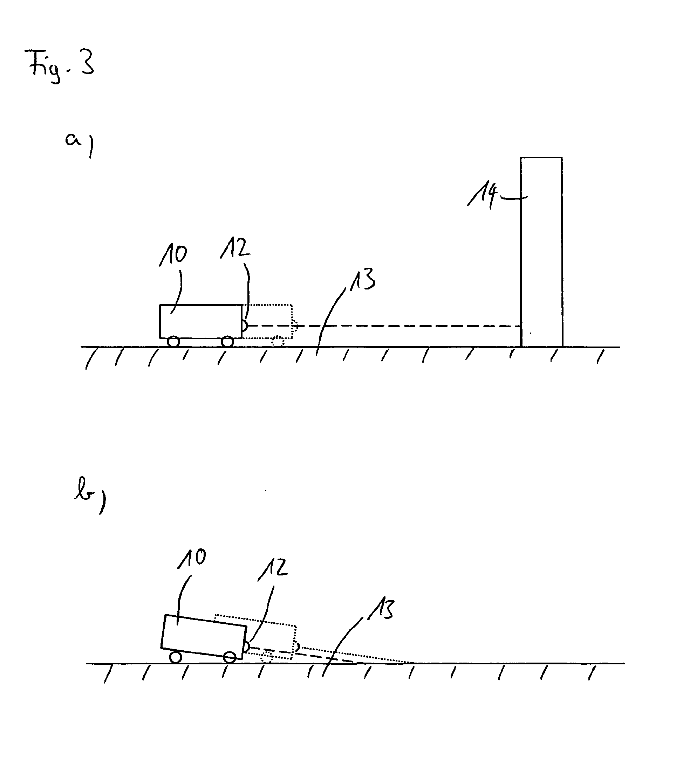

Fig. 3a zeigt ein Fahrzeug 10 mit einem erfindungsgemäßen Laserscanner 12 bei einer Objektmessung. Die Abtastebene des Laserscanners 12 ist dabei parallel zu dem Boden 13 orientiert und schneidet ein in der Fahrbahn des Fahrzeugs befindliches Objekt 14. Wie in Fig. 3a durch gepunktete Linien dargestellt, nimmt der durch den Laserscanner 12 messbare Abstand zwischen Fahrzeug 10 und Objekt 14 ab, wenn sich das Fahrzeug 10 auf das Objekt 14 zu bewegt.

Fig. 3b zeigt dasselbe Fahrzeug 10, wobei die Abtastebene des Fahrzeugs 10 aufgrund einer z.B. durch eine vorhergehende Bodenwelle verursachte Nickbewegung nach unten geneigt ist und den Boden 13 schneidet. Wie in Fig. 3b durch gepunktete Linien dargestellt, bleibt der durch den Laserscanner 12 messbare Abstand zwischen Fahrzeug 10 und Boden 13 im Wesentlichen gleich, während sich das Fahrzeug 10 auf dem Boden 13 weiter bewegt.

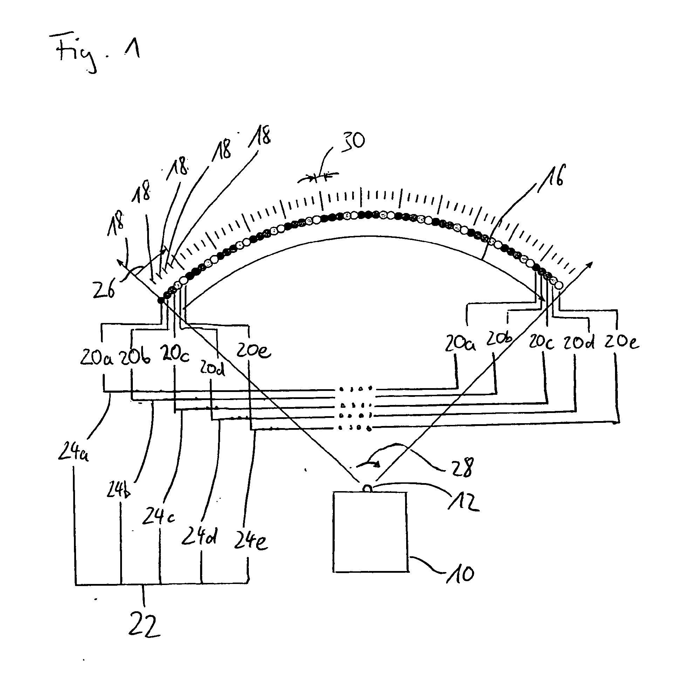

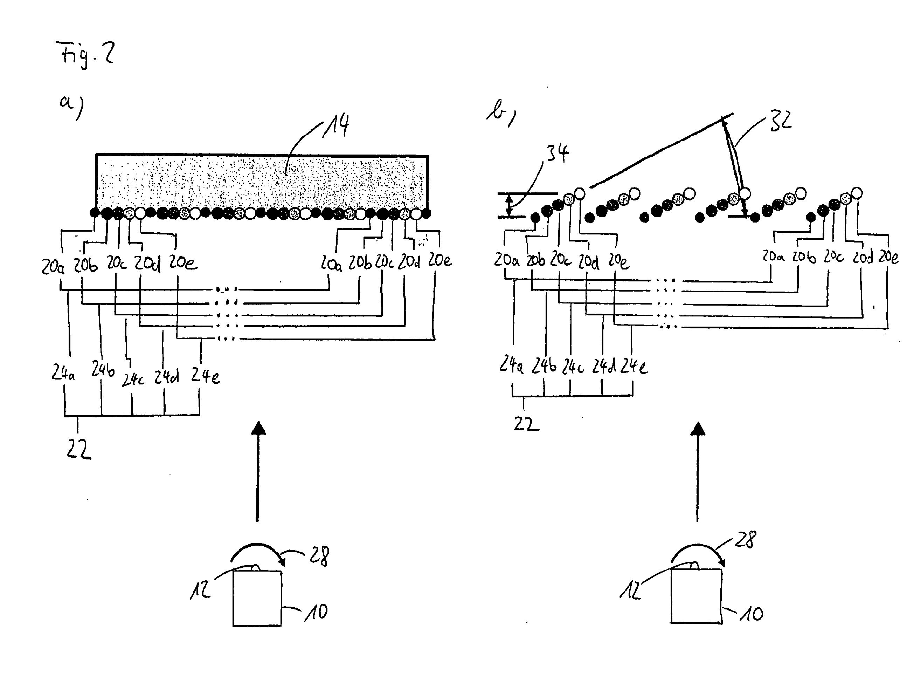

Fig. 1 veranschaulicht ein Verfahren gemäß einer ersten Ausführungsform der Erfindung. Das Verfahren dient zum ortsaufgelösten Erfassen der Umgebung eines sich auf einem Boden fortbewegenden Fahrzeugs 10 mittels eines an dem Fahrzeug angebrachten Laserscanners 12 und zur Unterscheidung zwischen einem in der Umgebung des Fahrzeugs vorhandenen Objekt 14 (siehe Fig. 2a) einerseits und dem Boden andererseits. Der Laserscanner 12 tastet die Umgebung in einer Scanebene ab und ermittelt dabei während eines Scans, der den in Fig. 1 durch einen Pfeil 16 angedeuteten Scanwinkel überstreicht, für unterschiedliche Richtungen 18 in der Scanebene jeweils einen Entfernungsmesswert 20, der durch Aussenden von Laserstrahlung in die jeweilige Richtung 18 und durch Auswerten der aus dieser Richtung 18 zurückgestrahlten Laserstrahlung nach dem Laufzeitmessverfahren ermittelt wird.

Die Zugehörigkeit der Entfernungsmesswerte 20 zu einem Scan wird dabei in den Figuren durch die Buchstaben a bis e hinter dem Bezugszeichen 20 angegeben, wobei die Scans a, b, c, d, e in dieser Reihenfolge zeitlich aufeinander folgend durchgeführt werden. Die zu einem Scan gehörigen Entfernungsmesswerte 20a-e bilden jeweils zusammen ein dem Scan zugeordnetes ortsaufgelöstes Einzelbild 24a, b, c, d, e.

Wie in Fig. 1 ersichtlich, enthalten die Einzelbilder 24a-e jeweils Entfernungsmesswerte 20a-e zu Richtungen 18, die in einem konstanten, in Fig. 1 durch einen Pfeil 26 dargestellten Winkelabstand von z.B. etwa 7,5 Grad in einer durch einen Pfeil 28 dargestellten Scanrichtung aufeinander folgen. Die Einzelbilder 24a-e sind dabei so zueinander versetzt, dass zwischen zwei benachbarten Entfernungsmesswerten 20a-e desselben Einzelbildes 24a-e jeweils genau ein Entfernungsmesswert 20a-e jedes anderen Einzelbildes 24a-e zu liegen kommt, sodass sich in dem Scanbild 22, das aus den Einzelbildern 24a-e zusammengesetzt wird, ein in Fig. 1 durch einen Pfeil 30 dargestellter konstanter Winkelabstand aller enthaltenen Entfernungsmesswerte 20a-e von ungefähr 1,5 Grad ergibt.

Zur Erstellung des Scanbildes 22 werden die Einzelbilder 24a-e abhängig von einer gemessenen aktuellen Fahrzeuggeschwindigkeit korrigiert. Nach der Korrektur der Einzelbilder 24a-e wird das Vorliegen unterschiedlicher Entfernungen der Einzelbilder 24a-e als Boden und das Vorliegen einer gemeinsamen Entfernung der Einzelbilder 24a-e als Objekt 14 gewertet.

Fig. 2a zeigt ein beispielhaftes Scanbild 22 nach einer Korrektur der Einzelbilder 24a-e bei einer Objektmessung. Bei der Korrektur der Einzelbilder 24a-e werden jeweils die Entfernungsmesswerte 20b-e, die zu späteren Scans gehören, nach hinten, d.h. hin zu größeren Entfernungen verschoben, um das tatsächliche Näherkommen des Objekts 14 aufgrund einer Annäherungsgeschwindigkeit zwischen Fahrzeug 10 und Objekt 14 auszugleichen.

Wenn es sich aber bei der jeweiligen Messung um eine wie in Fig. 2b gezeigte Bodenmessung handelt, ist die unkorrigierte gemessene Entfernung zu dem Boden bei jedem Scan immer ungefähr gleich, so dass nach der Korrektur die später aufgenommenen Einzelbilder 24b-e jeweils nach hinten versetzt erscheinen, wobei der Betrag des Versatzes der durchgeführten Korrektur mittels des Produkts aus der ermittelten Annäherungsgeschwindigkeit und dem zeitlich Abstand zwischen zwei aufeinander folgenden Scans entspricht.

Es ergibt sich somit bei einer Bodenmessung wie in Fig. 2b gezeigt ein charakteristisches Sägezahnmuster in dem korrigierten Scanbild 22, bei dem die Entfernungsmesswerte 20a-e, die zu unterschiedlichen Einzelbildern 24a-e gehören und jeweils einander entsprechen, unter einem Winkel 32 in einer geraden Linie nach hinten laufen und das bei der durch den Laserscanner erfolgenden Auswertung der Entfernungsmesswerte mittels einer entsprechend ausgebildeten Software erkannt werden kann. Fig. 2b zeigt beispielhaft einen Versatz 34 zwischen einem Entfernungsmesswert 20a des Einzelbildes 24a und einem entsprechenden Entfernungsmesswerts 20e des Einzelbildes 24e. Bei einer angenommenen Fahrzeuggeschwindigkeit von 10 m/s und einem zeitlichen Abstand zwischen zwei aufeinander folgenden Scans von 0,005 s ergibt sich der Versatz 34 zwischen den Entfernungsmesswerten 20a und 20e in Fig. 2b zu 0,2 m, wenn man berücksichtigt, dass zwischen den Scans a und e insgesamt vier Scanperioden liegen.

**Bezugszeichenliste**

| | |
|---|---|
| 10 | Fahrzeug |
| 12 | Laserscanner |
| 13 | Boden |
| 14 | Objekt |
| 16 | Scanwinkel |
| 18 | Richtung |
| 20a, b, c, d, e | Entfernungsmesswert |
| 22 | Scanbild |
| 24a, b, c, d, e | Einzelbild |
| 26 | Winkelabstand |
| 28 | Scanrichtung |
| 30 | Winkelabstand |
| 32 | Winkel |
| 34 | Versatz |

## Patentansprüche

1. Verfahren zum ortsaufgelösten Erfassen der Umgebung eines sich auf einem Boden (13) fortbewegenden Fahrzeugs (10) mittels eines Laserscanners (12),
bei dem der Laserscanner (12)
- die Umgebung in wenigstens einer Scanebene abtastet,
- während eines einen Scanwinkel (16) überstreichenden Scans für unterschiedliche Richtungen (18) in der Scanebene jeweils einen Entfernungsmesswert (20a-e) ermittelt, welcher durch Aussenden von Laserstrahlung in die jeweilige Richtung (18) und durch Auswerten der aus dieser Richtung (18) zurückgestrahlten Laserstrahlung nach dem Laufzeitmessverfahren ermittelt wird, und
- aus den Entfernungsmesswerten (20a-e) ein ortsaufgelöstes Scanbild (22) der Umgebung erstellt,
wobei das Scanbild (22) aus mehreren Einzelbildern (24a-e) aufgebaut wird, die aus Entfernungsmesswerten (20a-e) zeitlich aufeinander folgender Scans erstellt werden, **dadurch gekennzeichnet,**
**dass** die Einzelbilder (24a-e) mittels der aktuellen Fahrzeuggeschwindigkeit korrigiert werden, und
**dass** nach der Korrektur das Vorliegen unterschiedlicher Entfernungen (20a-e) der Einzelbilder (24a-e) als Boden (13) und das Vorliegen einer gemeinsamen Entfernung (20a-e) der Einzelbilder (24a-e) als Objekt (14) gewertet wird, um zwischen einem in der Umgebung des Fahrzeugs (10) vorhandenen Objekt (14) einerseits und dem Boden (13) andererseits zu unterscheiden.

2. Verfahren nach Anspruch 1,
**dadurch gekennzeichnet, dass**
die Einzelbilder (24a-e) örtlich zueinander versetzt sind.

3. Verfahren nach zumindest einem der vorstehenden Ansprüche,
**dadurch gekennzeichnet, dass**
die Einzelbilder (24a-e) jeweils Entfernungsmesswerte (20a-e) zu Richtungen (18) aufweisen, die innerhalb eines Scanwinkelbereichs liegen, wobei sich die Scanwinkelbereiche der Einzelbilder (24a-e) zumindest teilweise überlappen.

4. Verfahren nach zumindest einem der vorstehenden Ansprüche,
**dadurch gekennzeichnet, dass**
die Einzelbilder (24a-e) jeweils Entfernungsmesswerte (20a-e) zu Richtungen (18) aufweisen, die in regelmäßigen Winkelabständen (26), insbesondere gleichbeabstandet, aufeinander folgen.

5. Verfahren nach zumindest einem der vorstehenden Ansprüche,
**dadurch gekennzeichnet, dass**
die Richtungen (18), zu denen in dem aus den Einzelbildern (24a-e) aufgebauten Scanbild (22) Entfernungsmesswerte (20a-e) vorhanden sind, in regelmäßigen Winkelabständen (30), insbesondere gleichbeabstandet, aufeinander folgen.

6. Verfahren nach zumindest einem der vorstehenden Ansprüche,
**dadurch gekennzeichnet, dass**
in dem Scanbild (22) der Winkelabstand (26) zweier aufeinander folgender Richtungen (18) in den Einzelbildern (24a-e) jeweils größer ist als der Winkelabstand (26) aller einander entsprechenden Richtungen (18) der Einzelbilder (24a-e).

7. Verfahren nach zumindest einem der vorstehenden Ansprüche,
**dadurch gekennzeichnet, dass**
ein einzeiliger Laserscanner (12) verwendet wird, der die Laserstrahlung in genau einer Abtastebene aussendet.

8. Verfahren nach zumindest einem der vorstehenden Ansprüche,
**dadurch gekennzeichnet, dass**
zur Unterscheidung zwischen einem Objekt (14) und dem Boden (13) zusätzlich Informationen berücksichtigt werden, die durch ein Objektklassifizierungsverfahren und/oder durch ein Objektverfolgungsverfahren erhalten werden, wobei insbesondere das Objektklassifizierungsverfahren und/oder das Objektverfolgungsverfahren auf einer Analyse von Echopulsen der ausgewerteten zurückgestrahlten Laserstrahlung beruhen bzw. beruht, und wobei die Analyse der Echopulse wenigstes eine von der Energie der einzelnen Echopulse abhängige Echopulseigenschaft betrifft, insbesondere eine Echopulsbreite, eine Echopulshöhe und/oder eine Echopulsfläche.

9. Laserscanner, insbesondere zur Durchführung eines Verfahrens nach zumindest einem der vorstehenden Ansprüche, zum ortsaufgelösten Erfassen der Umgebung eines sich auf einem Boden (13) fortbewegenden Fahrzeugs (10),
wobei der Laserscanner (12) dazu ausgebildet ist,
- die Umgebung in wenigstens einer Scanebene abzutasten,
- während eines einen Scanwinkel (16) überstreichenden Scans für unterschiedliche Richtungen (18) in der Scanebene jeweils durch Aussenden von Laserstrahlung in die jeweilige Richtung (18) und durch Auswerten der aus dieser Richtung (18) zurückgestrahlten Laserstrahlung nach dem Laufzeitmessverfahren einen Entfernungsmesswert (20a-e) zu ermitteln, und
- aus den Entfernungsmesswerten (20a-e) ein ortsaufgelöstes Scanbild (22) der Umgebung zu erstellen, und
das Scanbild (22) aus mehreren Einzelbildern (24a-e) aufzubauen, die aus Entfernungsmesswerten (20a-e) zeitlich aufeinander folgender Scans erstellt werden, **dadurch gekennzeichnet, dass**
der Laserscanner (12) dazu ausgebildet ist,
die Einzelbilder (24a-e) mittels der aktuellen Fahrzeuggeschwindigkeit zu korrigieren, und
nach der Korrektur das Vorliegen unterschiedlicher Entfernungen (20a-e) der Einzelbilder (24a-e) als Boden (13) und das Vorliegen einer gemeinsamen Entfernung (20a-e) der Einzelbilder (24a-e) als Objekt (14) zu werten, um zwischen einem in der Umgebung des Fahrzeugs (10) vorhandenen Objekt (14) einerseits und dem Boden (13) andererseits zu unterscheiden.

10. Laserscanner nach Anspruch 9,
**dadurch gekennzeichnet, dass**
der Laserscanner (12) als einzeiliger Laserscanner (12) ausgebildet ist, der die Laserstrahlung in genau einer Abtastebene aussendet.

11. Laserscanner nach Anspruch 9 oder 10,
**dadurch gekennzeichnet, dass**
der Laserscanner (12) eine bewegliche, insbesondere eine rotierende, Ablenkeinrichtung umfasst, welche die ausgesendete Laserstrahlung in die jeweilige Richtung (18) in die Umgebung umlenkt und aus der jeweiligen Richtung (18) zurückgeworfene Laserstrahlung auf eine Empfangseinheit des Laserscanners (12) umlenkt.

## Claims

1. A method for the spatially resolved detection by means of a laser scanner (12) of the surroundings of a vehicle (10) moving on the ground (13),
wherein the laser scanner (12)
- scans the surroundings in at least one scan plane;
- determines a respective distance measurement value (20a-e) for different directions (18) in the scan plane during a scan sweeping over a scan angle (16), said distance direction value being determined by transmitting laser radiation in the respective direction (18) and by evaluating the laser radiation radiated back from this direction (18) using the time of flight measurement process; and
- prepares a spatially resolved scan image (22) of the surroundings from the distance measurement value (20a-e),
wherein the scan image (22) is built up of a plurality of individual images (24a-e) which are prepared from distance measurement values (20a-e) of scans following one another in time, **characterised in that**
the individual images (24a-e) are corrected by means of the current vehicle speed; and
**in that** the presence of different distances (20a-e) of the individual images (24a-e) is evaluated as the ground (13) and the presence of a common distance (20a-e) of the individual images (24a-e) is evaluated as an object (14) after the correction to distinguish between an object (14) present in the surroundings of the vehicle (10), on the one hand, and the ground (13), on the other hand.

2. A method in accordance with claim 1,
**characterised in that**
the individual images (24a-e) are spatially offset from one another.

3. A method in accordance with at least one of the preceding claims,
**characterised in that**
the individual images (24a-e) comprise respective distance measurement values (20a-e) for directions (18) which lie within a scanned angle region, with the scanned angle regions of the individual images (24a-e) at least partly overlapping.

4. A method in accordance with at least one of the preceding claims,
**characterised in that**
the individual images (2a-e) each comprise distance measurement values (20a-e) which follow one another at regular angular intervals (26), in particular at equal distances.

5. A method in accordance with at least one of the preceding claims,
**characterised in that**
the directions (18) for which distance measurement values (20a-e) are present in the scan image (22) built up from the individual images (24a-e) follow one another at regular angular intervals (30), in particular at equal distances.

6. A method in accordance with at least one of the preceding claims,
**characterised in that**
the angular interval (26) of two mutually following directions (18) in the individual images (24a-e) in the scan image (22) is respectively larger than the angular interval (26) of all mutually corresponding directions (18) of the individual images (24a-e).

7. A method in accordance with at least one of the preceding claims,
**characterised in that**
a single-line laser scanner (12) is used which transmits the laser radiation in exactly one scan plane.

8. A method in accordance with at least one of the preceding claims,
**characterised in that**,
for distinguishing between an object (14) and the ground (13), information is additionally taken into account which is obtained by an object classification process and/or by an object tracking process, with in particular the object classification process and/or the object tracking process being based on an analysis of echo pulses of the evaluated laser radiation which is radiated back, and with the analysis of the echo pulses relating to at least one echo pulse property, in particular an echo pulse width, an echo pulse height and/or an echo pulse surface, in dependence on the energy of the individual echo pulses

9. A laser scanner, in particular for carrying out a method in accordance with at least one of the preceding claims, for the spatially resolved detection of the surroundings of a vehicle (10) moving on the ground (13),
wherein the laser scanner (12) is configured
- to scan the surroundings in at least one scan plane;
- to determine a distance measurement value (20a-e) during a scan sweeping over a scan angle (16) for different directions (18) in the scan plane in each case by transmitting laser radiation in the respective direction (18) and by evaluating the laser radiation radiated back from this direction (18) using the time of flight measurement process; and
- to prepare a spatially resolved scan image (22) of the surroundings from the distance measurement values (20a-e); and
to build up the scan image (22) from a plurality of individual images (24a-e) which are prepared from distance measurement values (20a-e) of scans following one another in time,
**characterised in that**
the laser scanner (12) is configured
to correct the individual images (24a-e) by means of the current vehicle speed; and
to evaluate the presence of different distances (20a-e) of the individual images (24a-e) as the ground (13) and the presence of a common distance (20a-e) of the individual images (24a-e) as an object (14) after the correction to distinguish between an object (14) present in the surroundings of the vehicle (10), on the one hand, and the ground (13), on the other hand.

10. A laser scanner in accordance with claim 9,
**characterised in that**
the laser scanner (12) is configured as a single-line laser scanner (12) which transmits the laser radiation in exactly one scan plane.

11. A laser scanner in accordance with claim 9 or claim 10,
**characterised in that**
the laser scanner (12) comprises a movable deflection device, in particular a rotating deflection device, which deflects the transmitted laser radiation in the respective direction (18) and deflects laser radiation reflected back from the respective direction (18) onto a reception unit of the laser scanner (12).

## Revendications

1. Procédé pour la détection avec résolution locale de l'environnement d'un véhicule (10) qui se déplace sur un sol (13), au moyen d'un scanner à laser (12),
dans lequel le scanner à laser (12)
- palpe l'environnement dans au moins un plan de scannage,
- pendant un scannage couvrant un angle de scannage (16) on détermine une valeur de mesure d'éloignement (20a-e) respectivement pour des directions différentes (18) dans le plan de scannage, cette valeur étant déterminée par émission du rayonnement laser dans la direction respective (18) et par évaluation du rayonnement laser renvoyé depuis cette direction (18), selon le procédé de mesure de temps de parcours, et
- à partir des valeurs de mesures d'éloignement (20a-e) on établit une image scannée (22) de l'environnement avec résolution locale,
dans lequel l'image scannée (22) est composée de plusieurs images individuelles (24a-e), qui sont établies à partir de valeurs de mesures d'éloignement (20a-e) de scannages mutuellement successifs dans le temps,
**caractérisé en ce que**
les images individuelles (24a-e) sont corrigées au moyen de la vitesse actuelle du véhicule, et
après la correction, on interprète la présence d'éloignements différents (20a-e) des images individuelles (24a-e) comme étant le sol (13), et la présence d'un éloignement commun (20a-e) des images individuelles (24a-e) comme étant un objet (14), afin de faire une distinction entre un objet (14) présent dans l'environnement du véhicule (10) d'une part et le sol (13) d'autre part.

2. Procédé selon la revendication 1,
**caractérisé en ce que** les images individuelles (24a-e) sont décalées localement les unes par rapport aux autres.

3. Procédé selon l'une au moins des revendications précédentes,
**caractérisé en ce que** les images individuelles (24a-e) présentent chacune des valeurs de mesures d'éloignement (20a-e) vis-à-vis de directions (18) qui sont à l'intérieur d'une plage angulaire de scannage, et les plages angulaires de scannage des images individuelles (24a-e) se chevauchent au moins partiellement.

4. Procédé selon l'une au moins des revendications précédentes,
**caractérisé en ce que** les images individuelles (24a-c) présentent chacune des valeurs de mesures d'éloignement (20a-e) vis-à-vis de directions (18) qui se suivent mutuellement à des écarts angulaires réguliers (26), en particulier à des écarts égaux.

5. Procédé selon l'une au moins des revendications précédentes,
**caractérisé en ce que** les directions (18), vis-à-vis desquelles il existe des valeurs de mesures d'éloignement (20a-e) dans l'image scanner (22) composée d'images individuelles (24a-e), se suivent mutuellement à des écarts angulaires réguliers (30), en particulier à des écarts égaux.

6. Procédé selon l'une au moins des revendications précédentes,
**caractérisé en ce que**, dans l'image scannée (22), l'écart angulaire (26) de deux directions mutuellement successives (18) dans les images individuelles (24a-e) est respectivement plus grand que l'écart angulaire (26) de toutes les directions (18) mutuellement correspondante des images individuelles (24a-e).

7. Procédé selon l'une au moins des revendications précédentes,
**caractérisé en ce que** l'on utilise un scanner à laser (12) en forme de ligne unique, qui émet le rayonnement laser dans exactement un plan de palpage.

8. Procédé selon l'une au moins des revendications précédentes,
**caractérisé en ce que**
pour faire une distinction entre un objet (14) et le sol (13), on tient compte d'informations supplémentaires qui sont obtenues par un procédé de classification d'objet et/ou un procédé de poursuite d'objet, et le procédé de classification d'objet et/ou le procédé de poursuite d'objet est/sont basé(s) sur une analyse des impulsions des échos du rayonnement laser renvoyé évalué, et l'analyse des impulsions d'écho concerne au moins une propriété des impulsions d'écho qui dépend de l'énergie des impulsions d'écho individuelles, en particulier une largeur des impulsions d'écho, une hauteur des impulsions d'écho et/ou une surface des impulsions d'écho.

9. Scanner à laser, en particulier pour mettre en oeuvre un procédé selon l'une au moins des revendications précédentes, pour la détection avec résolution locale de l'environnement d'un véhicule (10) qui se déplace sur un sol (13),
dans lequel le scanner à laser (12) est réalisé pour
- palper l'environnement dans au moins un plan de scannage,
- déterminer, pendant un scannage couvrant un angle de scannage (16), une valeur de mesure d'éloignement (20a-e) respectivement pour des directions différentes (18) dans le plan de scannage, par émission du rayonnement laser dans la direction respective (18) et par évaluation du rayonnement laser renvoyé depuis cette direction (18), selon le procédé de mesure de temps de parcours, et
- établir à partir des valeurs de mesures d'éloignement (20a-e) une image scannée (22) de l'environnement avec résolution locale,
- composer l'image scannée (22) à partir de plusieurs images individuelles (24a-e), qui sont établies à partir de valeurs de mesures d'éloignement (20a-e) de scannages mutuellement successifs dans le temps,
**caractérisé en ce que**
le scanner à laser (12) est réalisé pour
corriger les images individuelles (24a-e) au moyen de la vitesse actuelle du véhicule, et
après la correction, interpréter la présence d'éloignements différents (20a-e) des images individuelles (24a-e) comme étant le sol (13), et la présence d'un éloignement commun (20a-e) des images individuelles (24a-e) comme étant un objet (14), afin de faire une distinction entre un objet (14) présent dans l'environnement du véhicule (10) d'une part et le sol (13) d'autre part.

10. Scanner à laser selon la revendication 9,
**caractérisé en ce que** le scanner à laser (12) est réalisé comme un scanner à laser (12) à ligne unique, qui émet le rayonnement laser dans exactement un plan de palpage.

11. Scanner à laser selon la revendication 9 ou 10,
**caractérisé en ce que** le scanner à laser (12) comprend un système de déflexion mobile, en particulier rotatif, qui défléchit le rayonnement laser émis vers la direction respective (18) dans l'environnement et qui dévie le rayonnement laser renvoyé depuis la direction respective (18) vers une unité de réception du scanner à laser (12).
